# EUROPÄISCHE PATENTANMELDUNG

(11) **EP 1 215 634 A2**
(43) Veröffentlichungstag der Anmeldung: **19.06.2002**
(21) Anmeldenummer: 01129521.9
(22) Anmeldetag: 11.12.2001
(51) Int. Cl.: G07F 19/00, G07F 17/32, G07F 1/00

(54) **Verfahren zum Betreiben einer Geldspieleinrichtung**

(30) Priorität: 12.12.2000 DE 10061822
(71) Anmelder: Bally Wulff Automaten GmbH, 12045 Berlin (DE)
(72) Erfinder: Pawlas, Axel F., 22605 Hamburg (DE)
(74) Vertreter: Liesegang, Eva

(57) **Zusammenfassung**

Die Erfindung betrifft Verfahren zum Betreiben einer Geldspieleinrichtung. Hierbei werden zwischen einer Geldspieleinrichtung (1), einer Servereinrichtung (2) und einer Mobilfunkeinrichtung (3) elektronische Daten ausgetauscht. Mit Hilfe des elektronischen Datenaustausches wird ein Benutzer der Geldspieleinrichtung (1) identifiziert. Bei erfolgreicher Identifizierung des Benutzers wird in der Geldspieleinrichtung (1) eine elektronische Aufbuchung vorgenommen, so daß dem Benutzer ein Einsatz zum Ausführen eines elektronischen Spiels mit Hilfe der Geldspieleinrichtung (1) zur Verfügung gestellt wird. Auf diese Weise ist das bargeldlose Betreiben von Geldspieleinrichtungen (1) ermöglicht.

## Beschreibung

Die Erfindung liegt auf dem Gebiet elektronischer Geldspieleinrichtungen und bezieht sich insbesondere auf Verfahren zum Betreiben elektronischer Geldspieleinrichtungen.

Benutzer können mit Hilfe von Geldspieleinrichtungen bzw. Geldspielgeräten ein elektronisch nach dem Zufallsprinzip gesteuertes Spiel ausführen. Hierbei setzen die Benutzer vor dem Beginn des Spiels einen bestimmten Geldbetrag als Einsatz fest. In Abhängigkeit vom Verlauf des elektronisch gesteuerten Spiels wird dieser Einsatz nach Abschluß des Spiels in der Regel erhöht oder vermindert. Der Benutzer kann mit Hilfe der Geldspieleinrichtung solange Spiele ausführen, bis der als Einsatz bestimmte Betrag verbraucht ist. Es ist jedoch auch möglich, daß sich ein Benutzer, insbesondere dann, wenn der Benutzer Geld gewonnen hat, zur Rückzahlung eines Teils oder des ganzen Einsatzes, und eines möglichen Gewinns entschließt und den entsprechenden Betrag auszahlen läßt.

Bei bekannten Geldspieleinrichtungen bzw. Geldspielgeräten muß der Benutzer zum Festsetzen seines Einsatzes Bargeld in die Geldspieleinrichtung einführen. Es ist auch bekannt, daß der Benutzer an einer Geldausgabeeinrichtung Wertmarken/Token erwirbt, beispielsweise Geldwechsler oder Geldwechsel-Tresore, um diese dann in Verbindung mit der Geldspieleinrichtung zu nutzen. In diesem Fall muß der Benutzer Bargeld in die Geldausgabeeinrichtung einführen. Es ist deshalb stets notwendig, daß der Benutzer ausreichend Bargeld mit sich trägt, um die Geldspieleinrichtung direkt oder nach vorheriger Nutzung der Geldausgabeeinrichtung für ein Spiel in Betrieb zu nehmen.

Aufgabe der vorliegenden Erfindung ist es, neue Verfahren zum Betreiben einer Geldspieleinrichtung zu schaffen, die die Bedienungsfreundlichkeit der Geldspieleinrichtung für die Benutzer verbessern sowie die Anwendungsmöglichkeiten der Geldspieleinrichtung erweitern.

Diese Aufgabe wird nach einem ersten Aspekt der Erfindung mittels eines Verfahrens zum Betreiben einer Geldspieleinrichtung gelöst, die eine Steuereinrichtung umfaßt und mit einer Servereinrichtung verbunden ist, so daß zwischen der Geldspieleinrichtung und der Servereinrichtung Daten ausgetauscht werden können, wobei das Verfahren die folgenden Verfahrensschritte aufweist:
a) Ausbilden einer Verbindung zwischen einer Mobilfunkeinrichtung und der Servereinrichtung, wobei die Verbindung eine Mobilfunkverbindung umfaßt;
b) elektronisches Erzeugen einer Anforderung zur Eingabe einer Personen-Kennzeichennummer (Personen-Kennzeichennummer - PIN) mittels der Servereinrichtung;
c) Übermitteln der Anforderung zur Eingabe der PIN von der Servereinrichtung an die Mobilfunkeinrichtung;
d) elektronisches Erfassen einer PIN-Eingabe mittels der Mobilfunkeinrichtung und Übermitteln der erfaßten PIN-Eingabe an die Servereinrichtung;
e) elektronisches Auswerten der erfaßten PIN-Eingabe unter automatischer Berücksichtigung elektronisch gespeicherter Benutzerinformationen mit Hilfe der Servereinrichtung zur Identifizierung eines Benutzers;
f) Übermitteln einer Freigabeinformation von der Servereinrichtung an eine Steuereinrichtung der Geldspieleinrichtung in Abhängigkeit von dem elektronischen Auswerten gemäß Verfahrensschritt e); und
g) automatisches Auslösen einer elektronischen Aufbuchung eines Geldbetrags in der Geldspieleinrichtung und einer Freigabe der Geldspieleinrichtung mit Hilfe Steuereinrichtung in Abhängigkeit von der Freigabeinformation, so daß die Geldspieleinrichtung vom Benutzer zum Ausführen eines Geldspiels nutzbar ist.

Die Aufgabe wird nach einem zweiten Aspekt der Erfindung durch ein Verfahren zum Betreiben einer Geldspieleinrichtung gelöst, das Verfahren die folgenden Verfahrensschritte aufweisend:
a) Ausbilden einer Verbindung zwischen einer Mobilfunkeinrichtung und einer Servereinrichtung, wobei die Verbindung eine Mobilfunkverbindung umfaßt;
b) elektronisches Erzeugen einer Anforderung zur Eingabe einer Personen-Kennzeichennummer (Personen-Kennzeichennummer - PIN) mittels der Servereinrichtung;
c) Übermitteln der Anforderung zur Eingabe der PIN von der Servereinrichtung an die Mobilfunkeinrichtung;
d) elektronisches Erfassen einer PIN-Eingabe mittels der Mobilfunkeinrichtung und Übermitteln der erfaßten PIN-Eingabe an die Servereinrichtung;
e) elektronisches Auswerten der erfaßten PIN-Eingabe unter automatischer Berücksichtigung elektronisch gespeicherter Benutzerinformationen mit Hilfe der Servereinrichtung zur Identifizierung eines Benutzers;
f) Ausbilden einer elektronischen Verbindung zum Austausch elektronischer Daten zwischen der Servereinrichtung und einer Geldausgabeeinrichtung und automatisches Auslösen einer elektronischen Aufbuchung eines Geldbetrags in der Geldausgabeeinrichtung in Abhängigkeit von dem elektronischen Auswerten gemäß Verfahrensschritt e);
g) automatisches Bereitstellen des aufgebuchten Geldbetrags für den Benutzer mit Hilfe der Geldausgabeeinrichtung; und
h) elektronisches Erfassen des aufgebuchten Geldbetrags durch die Geldspieleinrichtung und Freigeben einer Nutzung der Geldspieleinrichtung nach dem elektronischen Erfassen des aufgebuchten Geldbetrags.

Die Aufgabe wird nach einem weiteren Aspekt der Erfindung durch ein Verfahren zum automatischen bargeldlosen Auszahlen eines Geldgewinns beim Betreiben einer Geldspieleinrichtung gelöst, wobei das Verfahren die folgenden Verfahrensschritte aufweist:
- elektronisches Erfassen der Betätigung einer Rückzahlauslöseeinrichtung der Geldspieleinrichtung durch einen Benutzer;
- Übermitteln einer elektronischen Rückzahlinformation, die eine Information über den Geldgewinn, insbesondere dessen Betrag umfaßt, von der Geldspieleinrichtung an eine Servereinrichtung;
- elektronisches Erzeugen und Übermitteln einer Anforderung zur Eingabe einer Personen-Kennzeichennummer (Personen-Kennzeichennummer - PIN) mittels der Servereinrichtung;
- Auswerten einer elektrisch erfaßten PIN-Eingabe unter automatischer Berücksichtigung elektronisch gespeicherter Benutzerinformationen mit Hilfe der Servereinrichtung zur Identifizierung des Benutzers; und
- elektronisches Buchen des Geldgewinns auf ein dem identifizierten Benutzer mit Hilfe der Servereinrichtung elektronisch zugeordnetes Konto.

Mit Hilfe der Erfindung werden Verfahren zur Verfügung gestellt, die es ermöglichen, den zum Ausführen eines Spiels notwendigen Einsatz bzw. den nach Abschluß eines oder mehrerer Spiele für die Rückzahlung zur Verfügung stehenden Geldgewinn bargeldlos elektronisch zu verwalten. Auf diese Weise ist es für den Benutzer der Geldspieleinrichtung möglich, ein Spiel auszuführen, ohne daß der Benutzer über die notwendigen Bargeldmittel verfügt. Dem Benutzer wird es hierdurch erleichtert, die Geldspieleinrichtung zu beliebigen Zeitpunkten zu nutzen. Die Unabhängigkeit des Betreibens der Geldspieleinrichtung von ausreichend Bargeld erlaubt es darüber hinaus, die Geldspieleinrichtung an beliebigen Orten außerhalb von Spielkasinos oder dergleichen aufzustellen. Hierdurch wird das Spektrum von Anwendungsmöglichkeiten derartiger Geldspieleinrichtungen erweitert.

Ein weiterer Vorteil, welcher mit der Erfindung gegenüber dem Stand der Technik erreicht ist, besteht darin, daß in der Geldspieleinrichtung selbst keine Bargeldmittel angesammelt werden müssen. Insbesondere in die Geldspieleinrichtung eingeworfene Bargeldmittel können das Ziel einer mißbräuchlichen Nutzung der Geldspieleinrichtung sein. Die Möglichkeit zum bargeldlosen Betreiben der Geldspieleinrichtung vermindert so das Mißbrauchsrisiko beim Aufstellen derartiger Einrichtungen.

Der aufgebuchte Betrag kann dem Verfahren nach dem zweiten Aspekt der Erfindung zweckmäßig über eine online-Verbindung von der Geldausgabeeinrichtung an die Geldspieleinrichtung mittels elektronischer Daten übertragen werden, wodurch ein Verlust des Betrags durch den Benutzer vermieden wird.

Eine Verwendung moderner bargeldloser Zahlungsmittel ist bei einer Weiterbildung der Erfindung dadurch ermöglicht, daß der aufgebuchte Betrag auf einem elektronischen Speichermedium elektronisch gespeichert und in der Geldspieleinrichtung mit Hilfe eines Lesegeräts für das elektronische Speichermedium ausgelesen wird. Bei dem elektronischen Speichermittel kann es sich zweckmäßig eine Chipkarte oder einen elektronischen Token handeln.

Der aufgebuchte Betrag kann bei einer kostengünstigen Ausführungsform der Erfindung auch in Form von Token automatisch bereitgestellt werden.

Eine zweckmäßige Ausgestaltung der Erfindung sieht vor, daß eine Kennummer der Mobilfunkeinrichtung elektronisch erfaßt wird, während die Verbindung zwischen der Mobilfunkeinrichtung und der Servereinrichtung ausgebildet ist, und daß die Kennummer im Rahmen des Verfahrensschritts e) ausgewertet wird. Bei der Kennummer der Mobilfunkeinrichtung handelt es sich insbesondere um die der Mobilfunkeinrichtung in einem jeweiligen Mobilfunknetz zugeordnete Mobilfunknummer. Mit Hilfe der Erfassung der Kennummer der Mobilfunkeinrichtung und deren Auswertung wird zur Identifizierung des Benutzers ein weiterer Parameter genutzt, so daß die Wahrscheinlichkeit für eine richtige Identifizierung vergrößert wird.

Um die Geldspieleinrichtung für beliebige Benutzer unabhängig von deren gewählten Bankinstitut betreiben zu können, sieht eine vorteilhafte Ausführungsform der Erfindung vor, daß vor dem Verfahrensschritt f) wenigstens ein Teil der Benutzerinformationen an eine Bank-Servereinrichtung elektronisch übermittelt und der Geldbetrag mit Hilfe der Bank-Servereinrichtung und der Servereinrichtung elektronisch abgebucht wird.

Bei einer bevorzugten Ausgestaltung der Erfindung kann vorgesehen sein, daß mittels der Servereinrichtung eine Rufnummer elektronisch ermittelt wird, die von der Mobilfunkeinrichtung zum Ausbilden der Verbindung zwischen der Mobilfunkeinrichtung und der Servereinrichtung gemäß Verfahrensschritt a) genutzt wird, und daß mit Hilfe einer elektronischen Auswertung der ermittelten Rufnummer und elektronisch gespeicherter Geldspieleinrichtungsinformationen/Geldausgabeinrichtungsinformation, die eine elektronische Zuordnung der Rufnummer zu der Geldspieleinrichtung/der Geldausgabeeinrichtung umfaßt, die Geldspieleinrichtung/die Geldausgabeeinrichtung automatisch identifiziert wird. Hierdurch ist auf einfache Weise eine Möglichkeit geschaffen, eine zuverlässige Zuordnung des Datenaustausches zwischen der Mobilfunkeinrichtung und der Servereinrichtung zu der Geldspieleinrichtung/der Geldausgabeeinrichtung zu gewährleisten, dessen Nutzung/Freischaltung vom Benutzer gewünscht wird.

Um die einzelnen Schritte des Verfahrens zum Freischalten der Geldspieleinrichtung sowie deren Folgen für den Benutzer besser nachvollziehbar zu machen, kann bei einer bevorzugten Ausgestaltung der Erfindung vorgesehen sein, daß mit Hilfe der Servereinrichtung eine Information über die Abbuchung des Geldbetrags elektronisch erzeugt und mittels einer SMS-Nachricht (SMS - Short Message Service) an die Mobilfunkeinrichtung übermittelt wird.

Die Bedienungsfreundlichkeit der Geldspieleinrichtung wird bei einer zweckmäßigen Ausgestaltung der Erfindung dadurch verbessert, daß der elektronisch aufgebuchte Geldbetrag mit Hilfe einer Anzeigeeinrichtung der Geldspieleinrichtung/ der Geldausgabeeinrichtung ausgegeben wird.

Bei einer weiteren Ausgestaltung der Erfindung umfaßt das Verfahren vor dem Verfahrensschritt a) die folgenden Verfahrensschritte:
- elektronisches Erfassen einer die Kennummer der Mobilfunkeinrichtung umfassenden Tastenfeld-Eingabe mittels der Steuereinrichtung der Geldspieleinrichtung, wobei das Tastenfeld als Teil der Geldspieleinrichtung ausgebildet und mit der Steuereinrichtung verbunden ist;
- Übermitteln einer elektronischen Eingabe-Information, die Informationen über die erfaßte Tastenfeld-Eingabe, insbesondere die Kennummer der Mobilfunkeinrichtung umfaßt, von der Geldspieleinrichtung an die Servereinrichtung; und
- Verarbeiten der Eingabe-Information mittels der Servereinrichtung, derart, daß die Servereinrichtung die Kennummer nutzt, um das Ausbilden der Verbindung zwischen der Servereinrichtung und der Mobilfunkeinrichtung automatisch auszulösen.

Auf diese Weise kann ein vorhandenes Tastenfeld an der Geldspieleinrichtung von dem Benutzer genutzt werden, um das Aufbuchen der Geldspieleinrichtung und dessen Freischaltung zu veranlassen. Der Benutzer wird in diesem Fall vom Betreiber der Servereinrichtung auf seiner Mobilfunkeinrichtung zurückgerufen und muß nicht selbst eine Mobilfunkverbindung zu der Servereinrichtung herstellen, was für den Benutzer in der Regel mit Kosten verbunden ist.

Die Nutzung der Geldspieleinrichtung durch beliebige Personen, die ihr Konto jeweils bei verschiedenen Banken bzw. Kreditinstituten führen lassen, wird bei einer vorteilhaften Weiterbildung der Erfindung dadurch ermgölicht, daß der Geldbetrag von einem dem Benutzer mit Hilfe der Servereinrichtung elektronisch zugeordnetem Konto abgebucht und auf ein der Geldspieleinrichtung/ der Geldausgabeienrichtung elektronisch zugeordnetes Konto gebucht wird.

Die Anordbarkeit von Geldspieleinrichtungen wird bei einer zweckmäßigen Fortbildung des Verfahrens zum automatischen bargeldlosen Auszahlen eines Geldgewinns beim Betreiben der Geldspieleinrichtung dadurch verbessert, daß die PIN-Eingabe mit Hilfe einer Mobilfunkeinrichtung erfaßt und an die Servereinrichtung übermittelt wird.

Eine zusätzliche Nutzung der Mobilfunkeinrichtung, die ggf. mit weiteren Kosten für den Benutzer verbunden ist, kann bei einer vorteilhaften Ausführungsform der Erfindung dadurch vermieden werden, daß die PIN-Eingabe mit Hilfe der Geldspieleinrichtung/der Geldausgabeinrichtung erfaßt und an die Servereinrichtung übermittelt wird.

Das Nachvollziehen der einzelnen Verfahrensschritte und deren Folgen wird für den Benutzer der Geldspieleinrichtung bei einer zweckmäßigen Ausgestaltung der Erfindung dadurch erleichtert, daß mit Hilfe der Severeinrichtung eine Aufbuchungsinformation über das elektronische Buchen des Rückzahlgeldbetrags elektronisch erzeugt und mittels einer SMS-Nachricht an die Mobilfunkeinrichtung übermittelt wird.

Die Erfindung wird im Folgenden anhand von Ausführungsbeispielen unter Bezugnahme auf eine Zeichnung näher erläutert. Hierbei zeigen:
- Figur 1: eine schematische Darstellung zur Beschreibung eines Verfahrens zum Freischalten einer Geldspieleinrichtung;
- Figur 2: eine schematische Darstellung zur Beschreibung einer weiteren Ausführungsform eines Verfahrens zum Freischalten einer Geldspieleinrichtung;
- Figur 3: eine schematische Darstellung zur Beschreibung einer weiteren Ausführungsform eines Verfahrens zum Betreiben einer Geldspieleinrichtung; und
- Figur 4: eine schematische Darstellung zur Beschreibung von Verfahren zum automatischen bargeldlosen Auszahlen eines Geldgewinns beim Betreiben einer Geldspieleinrichtung.

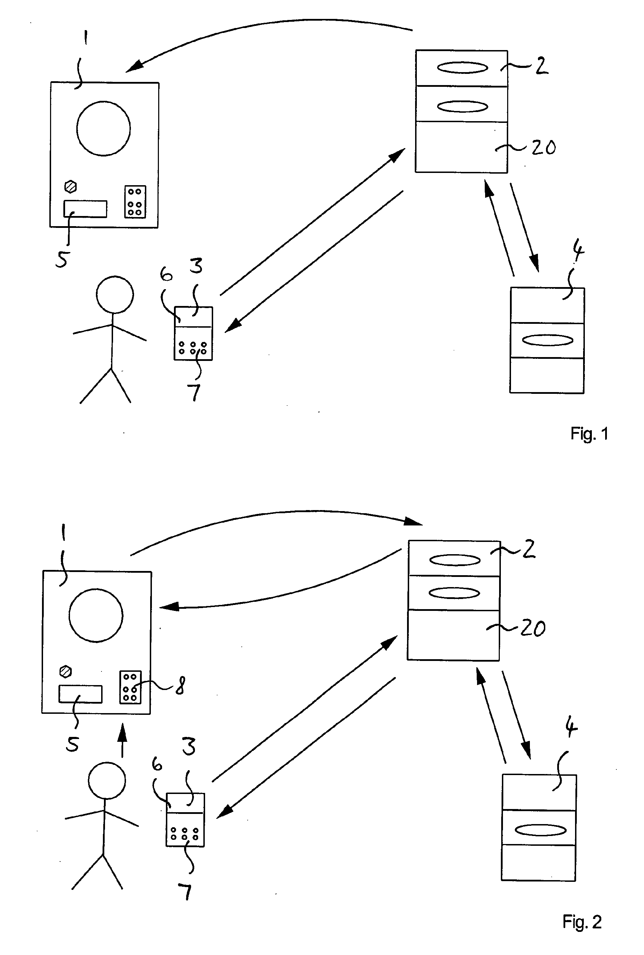

Unter Bezugnahme auf Figur 1 wird zunächst eine Ausführungsform eines Verfahrens zum Freischalten einer Geldspieleinrichtung 1 beschrieben. Die Geldspieleinrichtung 1 kann mit einer Servereinrichtung 2 elektronisch verbunden werden, so daß zwischen der Geldspieleinrichtung 1 und der Servereinrichtung 2 elektronische Daten austauschbar sind. Die Servereinrichtung 2 wird hierbei vorzugsweise von einem sogenannten Provider betrieben.

Ein Informationsaustausch zwischen der Servereinrichtung 2 und einer Mobilfunkeinrichtung 3 erfolgt unter Einbeziehung eines Mobilfunknetzes, für welches die Mobilfunkeinrichtung 3 zugelassen ist. Darüber hinaus kann die Servereinrichtung 2 elektronische Daten mit einer Bank-Servereinrichtung 4 austauschen, wobei dieser Datenaustausch mittels beliebiger hierzu geeigneter Techniken ausführbar ist, beispielsweise mittels einer Funkübertragung oder einer Online-Verbindung.

Bevor ein Benutzer das Verfahren zum Freischalten der Geldspieleinrichtung 1 nutzen kann, muß er sich als Nutzer registrieren lassen. Diese Registrierung kann mit Hilfe eines von dem Benutzer auszufüllenden Anmeldeformulars erfolgen. Hierbei kann vorgesehen sein, daß der Benutzer das Anmeldeformular ausfüllt und die angegebenen Daten dann zur Speicherung in einer Datenbank 20 in ein Computersystem eingegeben werden. Alternativ kann vorgesehen sein, daß der Benutzer ein elektronisches Anmeldeformular ausfüllt. Die von dem Benutzer anzugebenden Informationen umfassen beispielsweise den Namen, die Adresse und eine Bankverbindung. Darüber hinaus muß der Benutzer sein Einverständnis damit erklären, daß er an dem Verfahren zur bargeldlosen Nutzung der Geldspieleinrichtung 1 teilnehmen möchte.

Nach dem Erfassen der von dem Benutzer angegebenen Informationen in der Datenbank 20 wird dem Benutzer eine Personen-Kennzeichennummer (PIN) zugeordnet. Die PIN wird in der Datenbank 20 derart gespeichert, daß sie dem Benutzer bzw. den für den Benutzer gespeicherten Benutzerinformationen elektronisch zugeordnet ist. Die PIN wird dem Benutzer anschließend mitgeteilt. Dieses kann automatisch beispielsweise mit Hilfe einer SMS-Nachricht an die Mobilfunkeinrichtung 3 des Benutzers erfolgen.

Um die Geldspieleinrichtung 1 zum Ausführen eines elektronischen Geldspiels nutzen zu können, muß der Benutzer dann eine Telefonnummer anrufen, die beispielsweise auf einer Anzeigeeinrichtung 5 der Geldspieleinrichtung 1 ausgegeben wird. Es kann jedoch auch vorgesehen sein, daß die Telefonnummer auf die Geldspieleinrichtung aufgedruckt oder aufgeklebt ist. Nach dem Anwählen der Telefonnummer mit Hilfe der Mobilfunkeinrichtung 3 wird eine Verbindung zwischen der Severeinrichtung 2 und der Mobilfunkeinrichtung 3 aufgebaut. Die Servereinrichtung 2 erfaßt die von dem Benutzer angewählte Telefonnummer und erkennt automatisch, daß es sich um eine Anforderung zur Nutzung der Geldspieleinrichtung 1 handelt. Anschließend wird in der Servereinrichtung 2 eine Anforderung zur Eingabe der PIN elektronisch erzeugt und an die Mobilfunkeinrichtung 3 übermittelt. Auf der Basis der Anforderung wird auf einem Display 6 der Mobilfunkeinrichtung 3 eine entsprechende Eingabe angefordert. Daraufhin gibt der Benutzer die ihm im Rahmen der Registrierung mitgeteilte PIN ein. Die PIN-Eingabe wird mit Hilfe der Mobilfunkeinrichtung 3 erfaßt. Die erfaßten Informationen werden dann von der Mobilfunkeinrichtung 3 an die Servereinrichtung 2 übermittelt. Die von der Mobilfunkeinrichtung 3 erhaltenen Information werden von der Servereinrichtung 2 ausgewertet, um den Benutzer zu identifizieren. Wird bei der Identifizierung festgestellt, daß der Benutzer noch nicht registriert ist, wird eine Fehlermeldung erzeugt und an die Mobilfunkeinrichtung 3 übertragen, so daß der Benutzer über die fehlende Registrierung informiert wird.

Wird jedoch festgestellt, daß der Benutzer vorher bereits registriert wurde, so wird von dem Benutzer die Eingabe eines Geldbetrags angefordert, den er als Einsatz bei der Nutzung der Geldspieleinrichtung 1 setzen möchte. Diese erfolgt mit Hilfe der Erzeugung geeigneter elektronischer Daten in der Servereinrichtung 2, deren Übermittlung an die Mobilfunkeinrichtung 3 sowie der Erfassung und der Übermittlung der Benutzereingabe. Die Eingaben des Benutzers erfolgen hierbei vorzugsweise über eine Tastatur 7 der Mobilfunkeinrichtung 3 oder mit Hilfe einer Spracheingabe.

Nach erfolgreicher Identifizierung des Benutzers wird zwischen der Servereinrichtung 2 und der Bank-Servereinrichtung 4 automatisch eine Verbindung aufgebaut, um den von dem Benutzer angegebenen Geldbetrag von einem Konto des Benutzers abzubuchen. Zu diesem Zweck wird wenigstens ein Teil der in Verbindung mit der Registrierung des Benutzers erfaßten Benutzerinformationen, insbesondere die Bankverbindung, von der Servereinrichtung 2 an die Bank-Servereinrichtung 4 übermittelt. Anhand der Benutzerinformationen wird das Konto des Benutzers identifiziert und eine dem vom Benutzer angegebenen Geldbetrag entsprechende Abbuchung elektronisch vorgenommen.

Die Servereinrichtung 2 erkennt anhand der Telefonnummer, welche von dem Benutzer zum Ausbilden der Verbindung zwischen der Mobilfunkeinrichtung 3 und der Servereinrichtung 2 anfänglich genutzt wurde, auf welcher Geldspieleinrichtung 1 der Benutzer ein elektronisches Spiel ausführen möchte. Zu diesem Zweck steht der Servereinrichtung 2 beispielsweise eine Zuordnungstabelle zwischen verschiedenen Telefonnummern und verschiedenen Geldspieleinrichtungen zur Verfügung. Mit Hilfe einer elektronischen Auswertung der Zuordnungstabelle ist die Servereinrichtung 2 in der Lage, den Informationsaustausch zwischen der Mobilfunkeinrichtung 3 und der Servereinrichtung 2 sowie die mit Hilfe der Bank-Servereinrichtung 4 ausgeführte Abbuchung der Geldspieleinrichtung 2 zuzuordnen, deren Nutzung von dem Benutzer beabsichtigt wird. Nach einer derartigen Identifizierung der Geldspieleinrichtung 1 übermittelt die Servereinrichtung 2 geeignete elektronische Signale an die Geldspieleinrichtung 1, insbesondere an deren Steuereinrichtung (nicht dargestellt), um eine elektronische Aufbuchung der Geldspieleinrichtung 1 derart zu veranlassen, daß dem Benutzer der von ihm gewählte Geldbetrag als Einsatz zum Ausführen von Spielen zur Verfügung steht. Auf der Basis der von der Servereinrichtung 2 an die Geldspieleinrichtung 1 übermittelten elektronischen Signale wird die Geldspieleinrichtung 1 freigeschaltet, so daß sie vom Benutzer genutzt werden kann.

Eine weitere Ausführungsform des Verfahrens zum Betreiben der Geldspieleinrichtung 1 wird im Folgenden anhand der schematischen Darstellung in Figur 2 erläutert. Auch bei dieser Ausführungsform findet ein elektronischer Informationsaustausch zwischen der Geldspieleinrichtung 1 und der Servereinrichtung 2, der Mobilfunkeinrichtung 3 und der Servereinrichtung 2 sowie zwischen der Severeinrichtung 2 und der Bank-Servereinrichtung 4 statt. Der Benutzer gibt mit Hilfe einer Tastatureinrichtung 8, die als Teil der Geldspieleinrichtung 1 ausgebildet ist, seine Mobilfunknummer ein. Bei der Mobilfunknummer handelt es sich um die der Mobilfunkeinrichtung 3 in dem genutzten Mobilfunknetz zugeordnete Nummer (Handynummer). Des weiteren gibt der Benutzer über die Tastatureinrichtung 8 eine Information ein, die den Geldbetrag betrifft, den der Benutzer gern als Einsatz beim Ausführen eines elektronischen Spiels mit Hilfe der Geldspieleinrichtung 1 gesetzt haben möchte. Die Geldspieleinrichtung 1 stellt nun eine Verbindung zu der Severeinrichtung 2 her. Diese kann über ein Funknetz oder ein Festnetz erfolgen, wobei die Geldspieleinrichtung 1 über die geeigneten Schnittstellenmittel, beispielsweise ein Modem verfügt.

Die Servereinrichtung 2 ist bei dieser Ausführungsform vorzugsweise als Teil der Abrechnungszentrale eines Providers ausgebildet. Der Servereinrichtung 2 stehen deshalb elektronische Daten zur Verfügung, die es ermöglichen, die von dem Benutzer eingegebene Mobilfunknummer dem Benutzer elektronisch zuzuordnen. Nach der Übermittlung der Mobilfunknummer von der Geldspieleinrichtung 1 an die Servereinrichtung 2 werden von der Servereinrichtung 2 die notwendigen Schritte initiiert, die zu einem Verbindungsaufbau zwischen der Mobilfunkeinrichtung 3 und der Servereinrichtung 2 führen, d.h. die Mobilfunkeinrichtung 3 wird angerufen. Danach werden mit Hilfe der Servereinrichtung 2 die notwendigen elektronischen Daten erzeugt, um von dem Benutzer der Mobilfimkeinrichtung 3 eine Bestätigung dafür zu erhalten, daß der Benutzer die Geldspieleinrichtung 1 nutzen möchten, wobei der Benutzer den als Einsatz eingegebenen Geldbetrag bestätigen muß. In diesem Zusammenhang wird von dem Benutzer darüber hinaus die PIN abgefragt und in der Severeinrichtung 2 elektronisch ausgewertet, wie dies im Zusammenhang mit der Beschreibung des unter Bezugnahme auf Figur 1 erläuterten Verfahrens beschrieben wurde.

Nach der Identifizierung des Benutzers anhand der PIN und der Bestätigung des als Einsatz gewünschten Geldbetrags durch den Benutzer bucht die Servereinrichtung 2 diesen Geldbetrag von einem auf der Bank-Servereinrichtung 4 geführten Konto elektronisch ab. Dieses erfolgt wiederum mit Hilfe eines elektronischen Datenaustausches. Nach erfolgter elektronischer Abbuchung werden von der Severeinrichtung 2 elektronische Signale erzeugt und an die Geldspieleinrichtung 1 übermittelt, die von der Geldspieleinrichtung 1 derart verarbeitet werden, daß die Geldspieleinrichtung 1 für den Benutzer freigeschaltet wird.

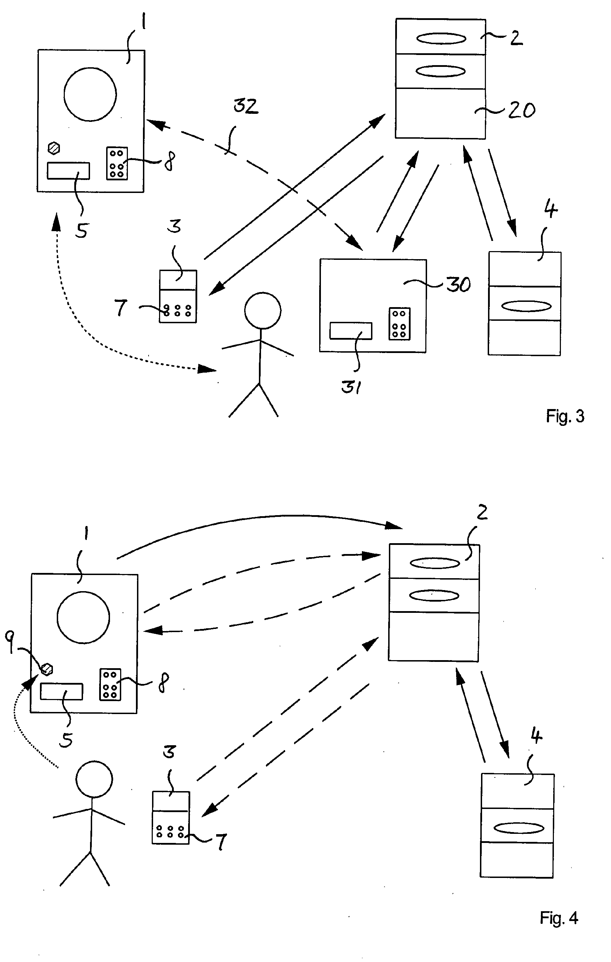

Figur 3 zeigt eine schematische Darstellung zur Erläuterung eines anderen Verfahrens zum Betreiben der Geldspieleinrichtung 1. Im Unterschied zu den unter Bezugnahme zu den Figuren 1 und 2 beschrieben Verfahren erfolgt bei der in Figur 3 dargestellten Ausführungsform die automatische Bereitstellung von Zahlungsmitteln, d.h. eines Geldbetrags, der zum Spielen in der Geldspieleinrichtung 1 eingesetzt werden kann, unter Zwischenschaltung einer Geldausgabeeinrichtung 30, die mit der Servereinrichtung 2 elektronische Daten austauscht. Bei der Geldausgabeeinrichtung 30 handelt es sich beispielsweise um einen Geldwechsler oder einen Geldwechsel-Tresor. Die automatische Nutzung der Servereinrichtung 2, der Mobilfunkeinrichtung 3 und der Bank-Servereinrichtung 4 erfolgt bei dem Verfahren nach Figur 3 zum Betreiben der Geldspieleinrichtung 1, insbesondere beim elektronischen Datenaustausch, der Benutzeridentifizierrung, dem Abbuchen des Geldbetrags usw., analog zu der unter Bezugnahme auf die Figuren 1 oder 2 beschriebenen Weise. Die Mobilfunkeinrichtung 3 wird in der oben beschriebenen Art zur Datenkommunikation mit der Servereinrichtung 2 genutzt, welche dann die erhaltenen Nachrichten von der Mobilfunkeinrichtung 3 analysiert, Antworten hierauf automatisch erzeugt und absendet sowie den elektronischen Datenaustausch mit der Bank-Servereinrichtung 4 steuert, usw. Im Unterschied zu den in Verbindung mit den Figuren 1 und 2 beschriebenen Ausführungsformen wird der Geldbetrag, den der Benutzer zum Betreiben der Geldspieleinrichtung 1 setzen möchte, bei der Ausführung in Figur 3 automatisch über die Geldausgabeeinrichtung 30 zur Verfügung gestellt. Dieses kann einerseits dadurch erfolgen, daß dem Benutzer Wertmarken oder Token über eine Ausgabeeinrichtung 31 ausgegeben werden. Andererseits könnte dem Benutzer der Geldbetrag auf eine Chipkarte elektronisch aufgebucht werden. Zu diesem Zweck umfaßt die Geldausgabeeinrichtung 30 dann ein Chipkarten-Lese/Schreibgerät (nicht dargestellt). Der Geldbetrag, welcher dem Benutzer mit Hilfe der Geldausgabeeinrichtung 30 zur Verfügung gestellt wird, wird von der Geldspieleinrichtung 1 dann automatisch erfaßt, so daß der Benutzer den Geldbetrag als Setzbetrag für ein oder mehrere Spiele einsetzen kann. Hierbei werden entweder die Wertmarken/Token von der Geldspieleinrichtung 1 automatisch erkannt oder die Chipkarte mit einem geeigneten Lesegerät gelesen und anschließend die Geldspieleinrichtung freigegeben.

Es kann auch vorgesehen sein, daß nach der elektronischen Bereitstellung des von dem Benutzer gewünschten Geldbetrags an der Geldausgabeeinrichtung 30 zwischen der Geldspieleinrichtung 1 und der Geldausgabeeinrichtung 30 über eine online-Verbindung 32 elektronische Daten ausgetauscht werden, derart, daß die Geldspieleinrichtung 1 von der Geldausgabeeinrichtung 30 eine Nachricht über den aufgebuchten Geldbetrag erhält und diesen Geldbetrag dann für ein elektronisches Spiel dem Benutzer zur Verfügung stellt.

Sowohl bei der in Verbindung mit Figur 1 als auch bei der in Verbindung mit Figur 2 beschriebenen Ausführungsform des Verfahrens kann vorgesehen sein, daß mit Hilfe der Servereinrichtung 2 eine elektronische Information über die erfolgte Abbuchung von der Bank-Servereinrichtung 4 erzeugt und mittels einer SMS-Nachricht an die Mobilfunkeinrichtung 3 übermittelt wird.

Unter Bezugnahme auf Figur 4 wird nachfolgend ein Verfahren zum automatischen bargeldlosen Auszahlen eines Geldgewinns bzw. eines Restbetrags beim Betreiben der Geldspieleinrichtung 1 beschrieben. Nach dem Ausführen eines oder mehrerer Spiele kann der von dem Benutzer als Einsatz gewählte Geldbetrag vollständig verbraucht sein. Es ist jedoch auch möglich, daß der Benutzer beim Spielen gewonnen hat, so daß ihm die Auszahlung eines Geldgewinns zusteht. In einem anderen Fall kann der Benutzer das Spielen mit Hilfe der Geldspieleinrichtung 1 abbrechen, bevor der gesamte Einsatz verbraucht ist, so daß dem Benutzer ein Restbetrag als Rückzahlung zusteht. Sollte dem Benutzer ein Geldgewinn und/oder ein Restbetrag zustehen, so kann der Benutzer mit Hilfe der Betätigung einer Rückzahltaste 9 die Rückzahlung des Geldbetrags veranlassen. Bei einer Ausführungsform wird nach einer Betätigung der Rückzahltaste 9 eine elektronische Information von der Geldspieleinrichtung 1 an die Servereinrichtung 2 übermittelt, mittels derer der Servereinrichtung 2 mitgeteilt wird, daß der Benutzer eine Rückzahlung wünscht. Zu diesem oder einem späteren Zeitpunkt teilt die Geldspieleinrichtung 1 der Servereinrichtung 2 die Höhe des Rückzahlungsbetrages mit. Um den rückzuzahlenden Geldbetrag dem richtigen Konto gutzuschreiben, wird von der Servereinrichtung 2 erneut eine Identifizierung des Benutzers initiiert. Hierbei wird wiederum eine Anforderung der PIN elektronisch erzeugt und an die Geldspieleinrichtung 1 oder die Mobilfunkeinrichtung 3 übermittelt. Die hierauf erfolgte PIN-Eingabe des Benutzers über die Tastatureinrichtung der Geldspieleinrichtung 3 oder das Tastenfeld 7 der Mobilfunkeinrichtung 3 wird elektronisch erfaßt und mit Hilfe der Servereinrichtung 2 ausgewertet. Nach der Identifizierung des Benutzers und einer optionalen Bestätigung des rückzuzahlenden Geldbetrags durch den Benutzer wird der Geldbetrag mit Hilfe eines elektronischen Datenaustausches zwischen der Servereinrichtung 2 und der Bank-Servereinrichtung 4 einem dem Benutzer zugeordneten Konto elektronisch gutgeschrieben.

Wenn dem Benutzer der Geldspieleinrichtung 1 nach Abschluß des Spielens nur ein geringer Geldbetrag, beispielsweise ein Betrag von weniger als DM 5,00 zurückgezahlt werden soll, kann vorgesehen sein, daß dieser Betrag über eine Vorrichtung zur Barauszahlung erstattet wird. Zu diesem Zweck kann die Geldspieleinrichtung 1 eine als solche bekannte Vorrichtung umfassen (nicht dargestellt). Bei Geldspieleinrichtungen, die vollständig ohne Barauszahlungen arbeiten, kann eine elektronische Information über den Rückzahlbetrag an einen Wechselgeldautomaten übermittelt werden. Der Benutzer kann sich den Rückzahlbetrag dann von dem Wechselgeldautomaten auszahlen lassen. Möglich wäre es in diesem Zusammenhang auch, daß eine elektronische Information über den Rückzahlbetrag auf einer Geldkarte gespeichert wird, die von dem Benutzer verwendet wird. Die Geldkarte kann der Benutzer dann für eine Rückzahlung mittels des Wechselgeldautomats nutzen.

Wenn die Identifizierung des Benutzers, insbesondere die PIN-Erfassung, mit Hilfe der Mobilfunkeinrichtung 3 erfolgt, wird zur Einleitung der Identifizierung die Mobilfunkeinrichtung 3 von der Servereinrichtung 2 angewählt bzw. angerufen. Die hierzu notwendige Mobilfunknummer teilt der Benutzer der Severeinrichtung 2 mittels einer weiteren Eingabe über die Tastatureinrichtung 8 der Geldspieleinrichtung mit. Es kann jedoch auch vorgesehen sein, daß die Servereinrichtung 2 die Mobilfunknummer der Mobilfunkeinrichtung 3 mit Hilfe der erfaßten PIN-Eingabe automatisch ermittelt. Hierzu werden vorab gespeicherte Benutzer-Informationsdaten genutzt.

Es kann weiterhin vorgesehen sein, daß mit Hilfe der Servereinrichtung 2 eine Information über die erfolgte elektronische Gutschrift auf das Konto des Benutzers automatisch erzeugt und als SMS-Nachricht an die Mobilfunkeinrichtung 3 übermittelt wird.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Betreiben einer Geldspieleinrichtung (1), die eine Steuereinrichtung umfaßt und mit einer Servereinrichtung (2) verbunden ist, so daß zwischen der Geldspieleinrichtung (1) und der Servereinrichtung (2) Daten ausgetauscht werden können, das Verfahren die folgenden Verfahrensschritte aufweisend:
a) Ausbilden einer Verbindung zwischen einer Mobilfunkeinrichtung (3) und der Servereinrichtung (2), wobei die Verbindung eine Mobilfunkverbindung umfaßt;
b) elektronisches Erzeugen einer Anforderung zur Eingabe einer Personen-Kennzeichennummer (Personen-Kennzeichennummer - PIN) mittels der Servereinrichtung (2);
c) Übermitteln der Anforderung zur Eingabe der PIN von der Servereinrichtung (2) an die Mobilfunkeinrichtung (3);
d) elektronisches Erfassen einer PIN-Eingabe mittels der Mobilfunkeinrichtung (3) und Übermitteln der erfaßten PIN-Eingabe an die Servereinrichtung (2);
e) elektronisches Auswerten der erfaßten PIN-Eingabe unter automatischer Berücksichtigung elektronisch gespeicherter Benutzerinformationen mit Hilfe der Servereinrichtung (2) zur Identifizierung eines Benutzers;
f) Übermitteln einer Freigabeinformation von der Servereinrichtung (2) an eine Steuereinrichtung der Geldspieleinrichtung (1) in Abhängigkeit von dem elektronischen Auswerten gemäß Verfahrensschritt e); und
g) automatisches Auslösen einer elektronischen Aufbuchung eines Geldbetrags in der Geldspieleinrichtung (1) und einer Freigabe der Geldspieleinrichtung (1) mit Hilfe der Steuereinrichtung in Abhängigkeit von der Freigabeinformation, so daß die Geldspieleinrichtung (1) vom Benutzer zum Ausführen eines Geldspiels nutzbar ist.

2. Verfahren zum Betreiben einer Geldspieleinrichtung (1), das Verfahren die folgenden Verfahrensschritte aufweisend:
a) Ausbilden einer Verbindung zwischen einer Mobilfunkeinrichtung (3) und einer Servereinrichtung (2), wobei die Verbindung eine Mobilfunkverbindung umfaßt;
b) elektronisches Erzeugen einer Anforderung zur Eingabe einer Personen-Kennzeichennummer (Personen-Kennzeichennummer - PIN) mittels der Servereinrichtung (2);
c) Übermitteln der Anforderung zur Eingabe der PIN von der Servereinrichtung (2) an die Mobilfunkeinrichtung (3);
d) elektronisches Erfassen einer PIN-Eingabe mittels der Mobilfunkeinrichtung (3) und Übermitteln der erfaßten PIN-Eingabe an die Servereinrichtung (2);
e) elektronisches Auswerten der erfaßten PIN-Eingabe unter automatischer Berücksichtigung elektronisch gespeicherter Benutzerinformationen mit Hilfe der Servereinrichtung (2) zur Identifizierung eines Benutzers;
f) Ausbilden einer elektronischen Verbindung zum Austausch elektronischer Daten zwischen der Servereinrichtung und einer Geldausgabeeinrichtung (30) und automatisches Auslösen einer elektronischen Aufbuchung eines Geldbetrags in der Geldausgabeeinrichtung (30) in Abhängigkeit von dem elektronischen Auswerten gemäß Verfahrensschritt e);
g) automatisches Bereitstellen des aufgebuchten Geldbetrags für den Benutzer mit Hilfe der Geldausgabeeinrichtung (30); und
h) elektronisches Erfassen des aufgebuchten Geldbetrags durch die Geldspieleinrichtung (1) und Freigeben einer Nutzung der Geldspieleinrichtung (1) nach dem elektronischen Erfassen des aufgebuchten Geldbetrags.

3. Verfahren nach Anspruch 2, **dadurch gekennzeichnet, daß** der aufgebuchte Betrag über eine online-Verbindung von der Geldausgabeeinrichtung (30) an die Geldspieleinrichtung (1) mittels elektronischer Daten übertragen wird.

4. Verfahren nach Anspruch 2, **dadurch gekennzeichnet, daß** der aufgebuchte Betrag auf einem elektronischen Speichermedium elektronisch gespeichert und in der Geldspieleinrichtung (1) mit Hilfe eines Lesegeräts für das elektronische Speichermedium ausgelesen wird.

5. Verfahren nach Anspruch 4, **dadurch gekennzeichnet, daß** das elektronische Speichermedium eine Chipkarte oder ein elektronischer Token ist.

6. Verfahren nach Anspruch 2, **dadurch gekennzeichnet, daß** der aufgebuchte Betrag in Form von Token automatisch bereitgestellt wird.

7. Verfahren nach einem der vorangehenden Ansprüche, **dadurch gekennzeichnet, daß** eine Kennummer der Mobilfunkeinrichtung (3) elektronisch erfaßt wird, während die Verbindung zwischen der Mobilfunkeinrichtung (3) und der Servereinrichtung (2) ausgebildet ist, und daß die Kennummer im Rahmen des Verfahrensschritts e) ausgewertet wird.

8. Verfahren nach einem der vorangehenden Ansprüche, **dadurch gekennzeichnet, daß** vor dem Verfahrensschritt f) wenigstens ein Teil der Benutzerinformationen an eine Bank-Servereinrichtung (4) elektronisch übermittelt und der Geldbetrag mit Hilfe der Bank-Servereinrichtung (4) und der Servereinrichtung (2) elektronisch abgebucht wird.

9. Verfahren nach einem der vorangehenden Ansprüche, **dadurch gekennzeichnet, daß** mittels der Servereinrichtung (2) eine Rufnummer elektronisch ermittelt wird, die von der Mobilfunkeinrichtung (3) zum Ausbilden der Verbindung zwischen der Mobilfunkeinrichtung (3) und der Servereinrichtung (2) gemäß Verfahrensschritt a) genutzt wird, und daß mit Hilfe einer elektronischen Auswertung der ermittelten Rufnummer und elektronisch gespeicherter Geldspieleinrichtungsinformationen/Geldausgabeeinrichtungsinformation, die eine elektronische Zuordnung der Rufnummer zu der Geldspieleinrichtung (1)/der Geldausgabeeinrichtung (30) umfaßt, die Geldspieleinrichtung (1)/die Geldausgabeeinrichtung (30) automatisch identifiziert wird.

10. Verfahren nach einem der vorangehenden Ansprüche, **dadurch gekennzeichnet, daß** mit Hilfe der Servereinrichtung (2) eine Information über die Abbuchung des Geldbetrags elektronisch erzeugt und mittels einer SMS-Nachricht (SMS ― Short Message Service) an die Mobilfunkeinrichtung (3) übermittelt wird.

11. Verfahren nach einem der vorangehenden Ansprüche, **dadurch gekennzeichnet, daß** der elektronisch aufgebuchte Geldbetrag mit Hilfe einer Anzeigeeinrichtung der Geldspieleinrichtung (1)/der Geldausgabeeinrichtung (30)' ausgegeben wird.

12. Verfahren nach Anspruch 1 oder 2, wobei das Verfahren vor dem Verfahrensschritt a) die folgenden Verfahrensschritte umfaßt:
- elektronisches Erfassen einer die Kennummer der Mobilfunkeinrichtung (3) umfassenden Tastenfeld-Eingabe mittels der Steuereinrichtung der Geldspieleinrichtung (1) oder einer Steuereinrichtung der Geldausgabeeinrichtung (30), wobei das Tastenfeld (8) als Teil der Geldspieleinrichtung (1)/der Geldausgabeinrichtung ausgebildet und mit der Steuereinrichtung verbunden ist;
- Übermitteln einer elektronischen Eingabe-Information, welche Informationen über die erfaßte Tastenfeld-Eingabe, insbesondere die Kennummer der Mobilfunkeinrichtung (3) umfaßt, von der Geldspieleinrichtung (1)/der Geldausgabeinrichtung an die Servereinrichtung (2); und
- Verarbeiten der Eingabe-Information mittels der Servereinrichtung (2), derart, daß die Servereinrichtung (2) die Kennummer nutzt, um das Ausbilden der Verbindung zwischen der Servereinrichtung (2) und der Mobilfunkeinrichtung (3) automatisch auszulösen.

13. Verfahren nach Anspruch 12, **dadurch gekennzeichnet, daß** der Geldbetrag von einem dem Benutzer mit Hilfe der Servereinrichtung (2) elektronisch zugeordnetem Konto abgebucht und auf ein der Geldspieleinrichtung (1)/der Geldausgabeinrichtung elektronisch zugeordnetes Konto gebucht wird.

14. Verfahren zum automatischen bargeldlosen Auszahlen eines Geldgewinns beim Betreiben einer Geldspieleinrichtung (1), das Verfahren die folgenden Verfahrensschritte aufweisend:
- elektronisches Erfassen der Betätigung einer Rückzahlauslöseeinrichtung (9) der Geldspieleinrichtung (1) durch einen Benutzer;
- Übermitteln einer elektronischen Rückzahlinformation, die eine Information über den Geldgewinn, insbesondere dessen Betrag umfaßt, von der Geldspieleinrichtung (1) an eine Servereinrichtung (2);
- elektronisches Erzeugen und Übermitteln einer Anforderung zur Eingabe einer Personen-Kennzeichennummer (Personen-Kennzeichennummer - PIN) mittels der Servereinrichtung (2);
- Auswerten einer elektronisch erfaßten PIN-Eingabe unter automatischer Berücksichtigung elektronisch gespeicherter Benutzerinformationen mit Hilfe der Servereinrichtung (2) zur Identifizierung des Benutzers; und
- elektronisches Buchen des Geldgewinns auf ein dem identifizierten Benutzer mit Hilfe der Servereinrichtung (2) elektronisch zugeordnetes Konto.

15. Verfahren nach Anspruch 14, **dadurch gekennzeichnet, daß** die PIN-Eingabe mit Hilfe einer Mobilfunkeinrichtung (3) erfaßt und an die Servereinrichtung (2) übermittelt wird.

16. Verfahren nach Anspruch 14, **dadurch gekennzeichnet, daß** die PIN-Eingabe mit Hilfe der Geldspieleinrichtung (1) erfaßt und an die Servereinrichtung (2) übermittelt wird.

17. Verfahren nach einem der Ansprüche 14 bis 16, **dadurch gekennzeichnet, daß** mit Hilfe der Servereinrichtung (2) eine Aufbuchungsinformation über das elektronische Buchen des Geldgewinns elektronisch erzeugt und mittels einer SMS-Nachricht an die Mobilfunkeinrichtung (3) übermittelt wird.
